(19) Europäisches Patentamt
European Patent Office
Office européen des brevets

(11) EP 2 221 629 A1

# (12) EUROPEAN PATENT APPLICATION

(43) Date of publication:
25.08.2010 Bulletin 2010/34

(51) Int Cl.:
*G01S 3/04* (2006.01)     *G01S 3/48* (2006.01)
*G01S 5/02* (2010.01)

(21) Application number: 09250474.5

(22) Date of filing: 23.02.2009

(84) Designated Contracting States:
AT BE BG CH CY CZ DE DK EE ES FI FR GB GR HR HU IE IS IT LI LT LU LV MC MK MT NL NO PL PT RO SE SI SK TR
Designated Extension States:
AL BA RS

(71) Applicants:
• Mitsubishi Electric R&D Centre Europe B.V.
Guildford
Surrey GU2 7YD (GB)
Designated Contracting States:
GB
• Mitsubishi Electric Corporation
Chiyoda-ku
Tokyo 100-8310 (JP)
Designated Contracting States:
AT BE BG CH CY CZ DE DK EE ES FI FR GR HR HU IE IS IT LI LT LU LV MC MK MT NL NO PL PT RO SE SI SK TR

(72) Inventor: Szajnowski, Wieslaw Jerzy
Guildford,
Surrey GU1 2AR (GB)

(74) Representative: Brinck, David John Borchardt et al
R.G.C. Jenkins & Co
26 Caxton Street
London SW1H 0RJ (GB)

## (54) Determination of time delay

(57) The delay between two signals is determined by: splitting each signal into quadrature components; obtaining zero crossings from a component of one signal, and using each crossing to trigger the sampling of the components of the other signal, repeating the sampling while introducing different time shifts between the signals to obtain a pair of representations of the sampled components, and using zero crossings of one representation to sample the other representation. The result is a sample pattern having a position, relative to the introduced time shift, determined by the delay between the signals.

a)

FIG. 9

**Description**

BACKGROUND OF THE INVENTION

Field of the Invention

This invention relates to a method and apparatus for determining the relative time delay between two signals, and is especially suited for determining the time-difference-of-arrival (TDOA) of two wideband band-pass signals. The invention is particularly but not exclusively applicable to estimating the line-of-bearing of a source of electromagnetic energy by determining the delay between two replicas of a wideband signal generated by the source and captured by a pair of sensors.

Description of the Prior Art

There are many circumstances in which there is a need to detect and localise a cooperating or a non-cooperative object of interest in some specified surveillance area. Such tasks can, for example, be performed by suitably spaced passive sensors which can extract useful information by collaborative processing of signals emitted by that object.
In some systems, when the distance between the object to be detected and the sensors is large, the direction of wave propagation is approximately equal at each sensor (the far-field condition), and the propagating field consists of planar waves. Thus, for a far-field source, the *angle of arrival* (AOA) or *direction-of-arrival* (DOA) in the coordinate system of the sensors can be estimated directly from the relative delays of signals captured by sensors at different locations. Such relative delay is commonly referred to as the *time-difference of arrival*, or simply TDOA.
The angle of arrival (AOA) measurement restricts the location of the source along a line at the estimated angle of arrival (AOA). When multiple angle-of-arrival (AOA) measurements are made simultaneously by multiple spatially-separated sensors, a triangulation method may be used to determine the location of the source at the intersection of these lines-of-bearing.

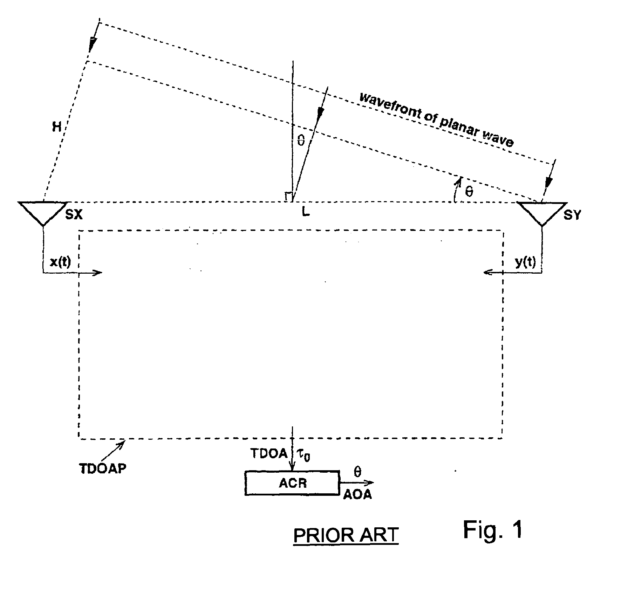

Fig. 1 illustrates schematically a method of determining the angle of arrival θ from the time-difference of arrival (TDOA). As shown, a planar wave generated by a remote electromagnetic source reaches sensor SY first, and then sensor SX. From geometrical considerations, it follows that the angle of arrival (AOA) θ can be calculated from

$$\theta = \arcsin\left(\frac{H}{L}\right) = \arcsin\left(\frac{\tau_0 c}{L}\right)$$

where L is the distance between sensors, H represents the additional path length to sensor SX as referenced to sensor SY, $\tau_0$ is the time-difference of arrival (TDOA), and c is the speed of light.
For the purpose of angle of arrival (AOA) determination, a required time-difference of arrival (TDOA) estimate needs to be obtained from two signals, x(t) and y(t), captured by sensors SX and SY, respectively, where

$$x(t) = s(t) + n_x(t) \qquad y(t) = s(t - \tau_0) + n_y(t)$$

where s(t) is an object-generated signal, $\tau_0$ denotes the time-difference of arrival (TDOA), and waveforms $n_x(t)$ and $n_y(t)$ represent background noise and other interference.
In the example shown in Fig. 1, the value $\tau_0$ is provided by a time-difference of arrival processor (TDOAP) crosscorrelating the wideband signals x(t) and y(t) captured by the sensors, i.e.. performing the operation

$$R_{xy}(\tau) = \frac{1}{T} \int_0^T x(t - \tau)\, y(t)\, dt$$

where the integral is evaluated over the observation interval of duration T and for a range, $-|\tau_{max}| < \tau < |\tau_{max}|$, of time-

difference of arrival (TDOA) values of interest. The value of argument τ that maximises the crosscorrelation function $R_{xy}$ (τ) provides an estimate of an unknown time-difference of arrival (TDOA).

The value of the time-difference of arrival (TDOA) supplied by the time-difference of arrival processor (TDOAP) is converted into a corresponding angle of arrival (AOA) θ by an angle calculator (ACR), which may, for example, be implemented in the form of a suitable look-up table stored in a read-only memory.

In some circumstances, signals emitted by objects of interest, in addition to occupying a wide frequency range, also manifest a non-stationary and chaotic nature with identifiable intermittent transients. As a result, many conventional crosscorrelation techniques based, explicitly or implicitly, on the assumptions that the signal is stationary and the noise is Gaussian are only of limited practical use. Furthermore, most practical implementations have to deal with discrete-time samples, so that the optimisation procedures and performance analyses carried out in the continuous-time framework cannot be fully applicable.

A novel time-domain technique, referred to as crosslation, has been disclosed in a number of patents and patent applications. For example, U.S. Pat. No. 6,539,320 discloses a robust method for determining the delay between two signals, in this case a primary reference signal and its time-delayed replica. The contents of U.S. Pat. No. 6,539,320 are incorporated herein by reference. In the following, the disclosed method will be referred to as "crosslation", and a system implementing the method will be referred to as a "crosslator". A crosslation technique involves using events (such as zero crossings) from one signal to sample the other signal. The events occur at irregular intervals, and are preferably at least substantially aperiodic. The samples are combined (e.g. by summing or averaging) to derive a value which represents the extent to which the sampling coincides with features of the second signal corresponding to the events. By repeating this for different delays between the first and second signals, it is possible to determine the delay which gives rise to the value representing the greatest coincidence of events, i.e. the delay between the two signals.

In the example described in the above disclosure, a nondeterministic signal x(t) is subjected to an unknown delay to produce a signal y(t), and a reference version of the signal x(t) is examined to determine the time instants at which its level crosses zero, either with a positive slope (an *upcrossing*) or with a negative slope (a *downcrossing*). The time instants of these crossing events are used to obtain and align respective segments of the signal y(t), the segments having a predetermined duration. The segments corresponding to zero upcrossings are all summed, and the segments corresponding to zero downcrossings are all subtracted from the resulting sum. A representation of such segment combination is then examined to locate a feature in the form of an S-shaped odd function of relative time. In the following, the S-shaped odd function will be referred to as the "*crosslation* function".

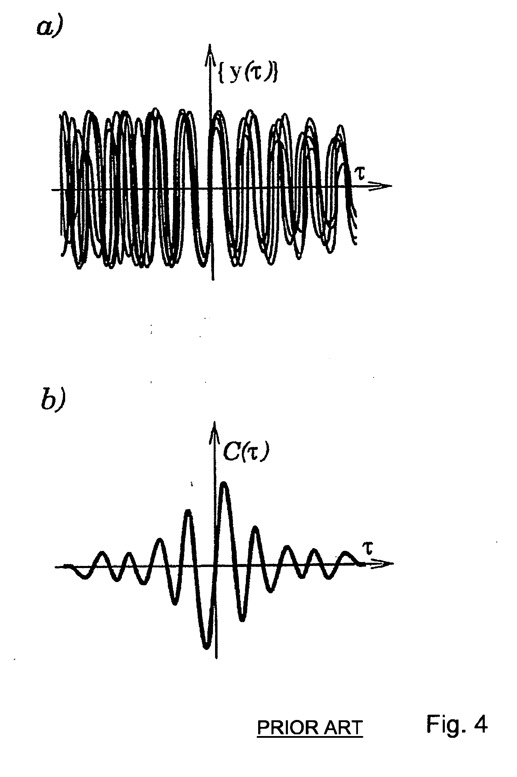

The position within the representation of a zero-crossing in the centre of the crosslation function represents the amount of the mutual delay between the two signals being processed. Fig. 4b shows an example of a crosslation function obtained experimentally by processing a random bandpass signal and its time-delayed replica, the function having an S-shaped portion at its centre.

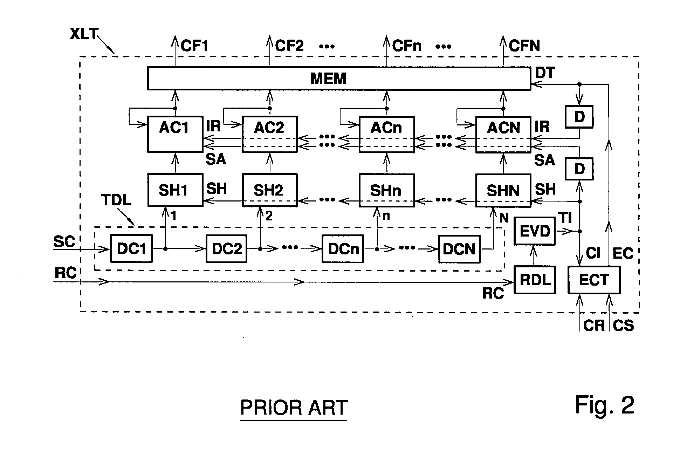

Fig. 2 shows one possible example of exploiting the concept of crosslation to construct a system capable of determining the delay between a nondeterministic signal x(t), which may be locally generated, and its time-delayed replica y(t). The signal y(t) is the sum of noise $n_y(t)$ and the signal x(t) attenuated by a factor of α and delayed by $τ_0$, hence

$$y(t) \ = \ \alpha x(t - \tau_0) + n_y(t)$$

The same techniques can be used in a passive system to determine the delay between two received signals.

Referring to Fig. 2, a received signal y(t) is suitably conditioned and applied to an input SC of a crosslator XLT. The crosslator XLT comprises a cascade of N delay cells, DC1, ..., DCn, ..., DCN, forming a tapped delay line TDL, a plurality of sample-and-hold circuits, SH1, ..., SHn, ..., SHN, a plurality of accumulators AC1, ..., ACn, ..., ACN, a memory MEM, a constant delay line RDL, an event detector EVD, an event counter ECT, and two auxiliary delay units D.

The suitably conditioned (e.g., hard-limited) waveform y(t) is applied to the input of the delay line TDL. Each of N taps of the delay line TDL provides a time-delayed replica of the analyzed signal y(t) applied to input SC. At any time instant, the values observed at the N taps of the line TDL form jointly a representation of a finite segment of the input signal y(t) propagating along the line TDL. Preferably, the relative delay between consecutive taps of the line TDL has a constant value, and the total delay of the line TDL represents the difference between the minimum and maximum delays to be detected.

A signal x(t) serving as a reference signal is (after suitable conditioning if necessary) applied to a reference input RC of the crosslator XLT. The reference signal x(t) is delayed in the constant delay line RDL by a time amount equal approximately to the mid-point of the range between the minimum and maximum delays to be detected. The output of the delay line RDL drives the event detector EVD.

When the event detector EVD detects a zero upcrossing in the delayed signal y(t), a short trigger pulse TI is produced at output TI. The short trigger pulse TI is used to initiate, via the common input SH, a simultaneous operation of all sample-and-hold circuits, SH1, ..., SHn, ..., SHN. Each sample-and-hold circuit SHn captures the instantaneous value of the signal appearing at its input; this value is then acquired by a respective accumulator ACn at the time instant determined by a delayed trigger pulse TI applied to the common input SA. The trigger pulse TI also increments by one via input CI the current state of an event counter ECT.

The capacity of the event counter ECT is equal to a predetermined number of zero crossings to be detected in the reference signal x(t). Accordingly, the time interval needed to detect the predetermined number of zero crossings will determine the duration of one complete cycle of operation of the crosslator system.

The capacity of the event counter ECT can be set to a required value by applying a suitable external control signal to input CS. Additionally, the state of the event counter ECT can be reset, via input CR, to an initial 'zero state'; this 'zero state' will also reset to zero all the accumulators. The event counter ECT can be alternatively arranged to operate continually in a 'free-running' fashion.

A trigger pulse TI delayed in the delay unit D initiates, via common input SA, the simultaneous operation of all accumulators driven by respective sample-and-hold circuits. The function of each accumulator ACn is to perform addition of signal values appearing successively at its input during each full operation cycle of the crosslator system. As explained below, all the accumulators are reset to zero, via common input IR, before the start of each new cycle of operation.

When a predetermined number of zero crossings has been detected by the event detector EVD, and registered by the event counter ECT, an end-of-cycle pulse EC is produced at the output of the counter ECT. This pulse initiates, via input DT, the transfer of the accumulators' data to the memory MEM. As a result, a discrete-time version of the determined crosslation function C($\tau$) will appear at the N outputs, CF1, ..., CFn, ..., CFN of the memory MEM.

An end-of-cycle pulse EC, suitably delayed in the delay unit D, is used to reset to zero, via common input IR, all the accumulators. Also, when operating in a 'free-running' mode, the event counter ECT after reaching its maximum value will revert to its initial 'zero state'. At this stage, the crosslator XLT, having completed its full cycle of operation, is ready to start a new cycle. It should be pointed out that the operation of the crosslator XLT can be terminated and re-started at any time by applying a suitable control signal to input CR of the event counter ECT.

Fig. 4a is an example of an overlay of time-aligned segments of a random bandpass signal y(t) successively obtained by the sample-and-hold circuits SH1, ..., SHn, ..., SHN, and Fig. 4b depicts the crosslation function C($\tau$) representing the observed vibrations and obtained by the accumulators AC1, ..., ACn, ..., ACN.

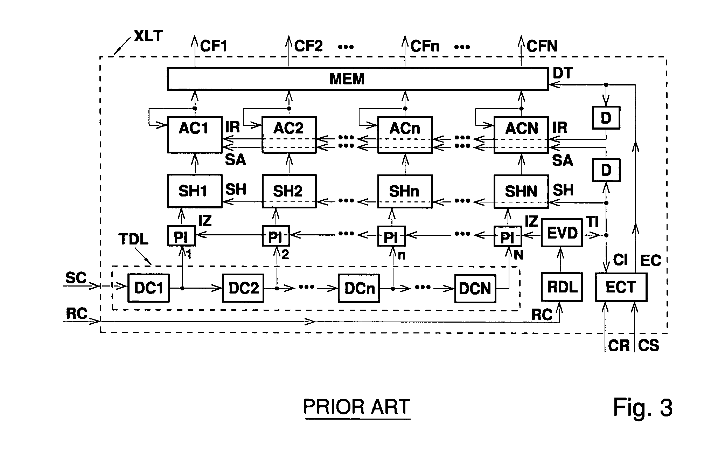

The event detector EVD could be arranged to detect downcrossings instead of upcrossings. In a modified structure shown in Fig. 3, both upcrossings and downcrossings are detected. In Fig. 3, an array of identical polarity-reversal circuits PI is disposed such that each circuit PI can reverse the polarity of a sample received from a respective tap of the delay line TDL before the sample is presented to the corresponding sample-and-hold circuit. The event detector EVD has an output IZ and when the event detector EVD detects a zero crossing in the delayed reference signal x(t), the output IZ supplies a signal indicating the type (up or down) of a detected zero crossing. In response to this signal, each circuit PI either passes its input signal with a reversed polarity (when a zero downcrossing is detected), or passes its input signal in its original form (when a zero upcrossing is detected).

Irrespective of whether upcrossings or downcrossings or both are used, a crosslation-based technique always includes a step of determining the time instants at which a reference signal crosses a predetermined threshold. Those specific time instants are also referred to as *significant events.* In a hardware implementation of crosslation, significant events define the time instants at which suitable trigger pulses are generated.

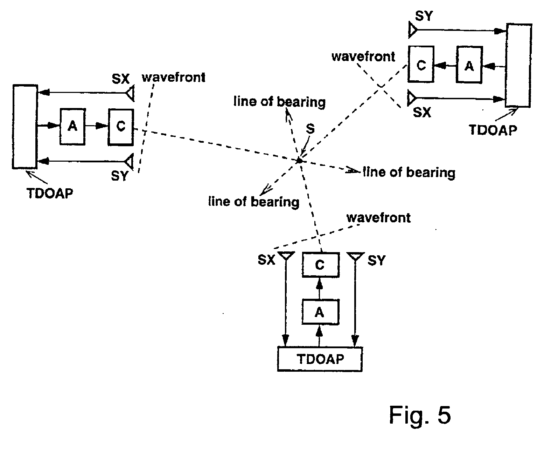

Fig. 5 depicts an example of a possible surveillance scenario in which the present invention can be exploited. In this specific case, a surveillance network utilizes three units, each comprising a suitable illuminator and/or a camera C, driven by an angle-calculator/actuator A that receives time-difference of arrival (TDOA) information from a time-difference of arrival processor (TDOAP) that processes jointly two signals supplied by a pair of electromagnetic sensors, SX and SY. It is assumed that a signal emitting source, such as a radio transmitter or radio tag, is positioned at location S.

When in a search-and-rescue (SAR) mission or precision asset location (PAL) application, an object of interest carrying a radio transmitter, has been detected in the region under surveillance, the estimated angles of arrival (lines of bearing) can be processed jointly to determine the object's location. In this case, the surveillance units can be viewed as the nodes of a distributed sensor network supplying information to a higher-order data fusion centre. It is assumed that there is provided a communication channel in the form of a wired or wireless link, available for information exchange between the surveillance units and the data fusion centre.

In an alternative arrangement, a single unit (e.g., an UAV or UGV) may move along a prescribed trajectory to determine multiple bearing lines and then utilize them to localize a signal emitting source of interest.

In some applications, an 'electronically silent' object may be illuminated by a wideband signal so 'engineered' as to facilitate detection and localisation in multiuser environments. For example, a source of suitable wideband 'galactic' noise can be used for covert operation performed to identify and localise an object of interest, such as a vehicle, vessel, cargo container or person.

The crosslation techniques of U.S. Pat. No. 6,539,320 for time-delay determination are robust and particularly useful for processing non-Gaussian signals. However, crosslation in the disclosed form is not well suited to time-difference of arrival (TDOA) determination.

EP-A-1596220 discloses a further development of crosslation techniques applicable to systems such as those shown in Figs. 1 and 5. In EP-A-1596220, each of the two input signals is sampled in response to zero crossings in the other signal, thereby to provide two crosslation functions which can be combined to obtain results which are less affected by noise. Furthermore, the signal processing can be adapted such that the derivative of the crosslation function is provided, so as to obtain an output which emphasizes the portion of the crosslation function representing the delay between the signals.

It would be desirable to provide an improved time delay measurement technique, preferably one which is more suited to detecting angle of arrival than prior art arrangements, and one which can for example be applied to systems such as those shown in Fig. 1 and Fig. 5.

## SUMMARY OF THE INVENTION

Aspects of the present invention are set out in the accompanying claims.

In accordance with a further independent aspect of the invention, the delay between two signals is determined by: splitting at least one signal into phase-shifted (e.g. quadrature) versions; obtaining zero crossings from the other signal; using each crossing to trigger the sampling of the phase-shifted versions; and repeating the sampling while introducing different time shifts between the signals. The samples of each version form a representation of that version which has an envelope whose position is dependent on the time delay. Using both representations, the delay can be calculated with improved accuracy, based on the positions of the representations, by measuring the positions of the envelopes or, preferably, measuring the positions of particular features (e.g. individual peaks) in one or both of the representations for enhanced accuracy.

Preferably each phase-shifted signal version has one or more frequency components which are all phase-shifted by substantially the same phase amount with respect to the corresponding components in the other signal version.

Like the crosslation function discussed above, each representation contains features whose positions (relative to the introduced time shift) are determined by the signal delay. By exploiting both representations obtained using the respective phase-shifted versions of the first signal, the signal delay can be calculated to a higher precision. Furthermore, accurate calculations can be carried out even if the phase of the sampling signal is so related to that of one of the sampled signal versions that the magnitudes of the samples are low; in such a situation, because of the phase relationship between the sampled signal versions, it can be ensured that the sample magnitudes from the other sampled signal version will be substantial.

Various techniques may be used to calculate the signal delay from the pair of representations. In the embodiments described below, zero crossings of one representation are used to sample the other representation. The result is a sample "time-fringe" pattern having a position, relative to the introduced time shift, determined by the delay between the signals. A matched filter (for example) may be used to detect the position of this pattern.

In would alternatively be possible to determine the position of the envelopes of the representations. For example, the samples forming each representation could be squared and added to the corresponding squared samples of the other representation to form a single combined representation which can be evaluated to determine the position of a characteristic feature and thus the signal delay.

It will be appreciated from the above that the present invention involves obtaining a representation of a signal by sampling the signal at instants determined by events (such as zero-crossings) in a second signal (the 'sampling' signal), and preferably repeating the operation with different delays of the sampling signal relative to the sampled signal. This operation is similar to the crosslation processing described above. However, in crosslation processing, the sampled signal and the sampling signal have the same phase (assuming zero delay between the signals). In contrast, the present invention involves using a sampling signal to sample two signal versions which are phase-shifted (preferably by 90°) relative to each other. The sampling signal will thus (assuming zero delay between the sampled and sampling signals) be phase-shifted relative to at least one of the sampled signals.

In order to render the following description more compact, this process of sampling using zero crossings of the sampling signal, wherein there is a phase-shift between the sampling and sampled signals, will be referred to below as wavecore processing', and the resulting representation will be referred to as a 'wavecore function'.

In some embodiments, the second signal (i.e. the sampling signal) is in phase with one of the versions of the first signal, so that the sampling of this version will produce a crosslation function. Because the sampling signal will be phase-shifted relative to the other version, the sampling of the second version will produce a wavecore function. The calculation of the signal delay may involve obtaining a sample pattern by using level crossings of the wavecore function to sample the crosslation function and/or using level crossings of the crosslation function to sample the wavecore function, to derive the sample (or "fringe") pattern.

The location of the sample pattern, and hence the time delay between the signals, is, in a preferred embodiment, determined using a matched filter.

BRIEF DESCRIPTION OF THE DRAWINGS

Arrangements embodying the invention will now be described by way of example with reference to the accompanying drawings, throughout which like reference symbols represent like elements, and in which:

Fig. 1 illustrates schematically a method of determining the angle of arrival $\theta$ from the time-difference of arrival $\tau 0$ supplied by a conventional correlation-based processor TDOAP;
Fig. 2 shows an example of a crosslator used to determine the delay between two input signals;
Fig. 3 shows another example of a crosslator used to determine the delay between two input signals;
Fig. 4a shows an example of overlaying sampled segments of an input signal, and
Fig. 4b shows the crosslation function obtained by summing those segments;
Fig. 5 illustrates an example of surveillance apparatus to which the techniques of the present invention may be applied;
Fig. 6 shows a signal to be processed according to the present invention and its quadrature version;
Fig. 7 illustrates how segments of the signal of Fig. 6 are obtained;
Fig. 8a shows the overlain segments of Fig. 7 and Fig. 8b shows the wavecore function obtained by summing those segments;
Fig. 9a is a block diagram of a wavecore processor for a system according to the present invention and Fig. 9b shows a modified version of the processor;
Fig. 10 shows an average wavecore function and an average crosslation function of the same signal;
Fig. 11 shows an average wavecore function and an average crosslation function of another signal;
Fig. 12 schematically represents different combinations of sampling arrangements;
Fig. 13 shows various wavecore and crosslation functions resulting from different sampling arrangements;
Fig. 14 illustrates how sample patterns (or *fringes*) can be obtained from crosslation and wavecore functions;
Fig. 15 is a detailed block diagram of an analytic crosslator for performing crosslation and wavecore processing;
Fig. 16 illustrates discrete wavecore and crosslation functions obtained from practical processing techniques;
Fig. 17 depicts schematically interpolation operations performed to derive sample patterns, or fringes;
Fig. 18 shows a processor for deriving fringes using the interpolation technique of Fig. 17;
Fig. 19 shows a basic fringe pattern obtained by the signal processor of Fig. 18;
Fig. 20 shows how basic fringe patterns obtained by the signal processor of Fig. 18 can be combined;
Fig. 21 depicts examples of the impulse responses of various practical approximations to a filter matched to a reference time-fringe pattern;
Fig. 22 is block diagram of an angle of arrival detector in accordance with the invention; and
Fig. 23 illustrates how the fringe patterns can be used for time delay measurement.

DETAILED DESCRIPTION OF THE PREFERRED EMBODIMENTS

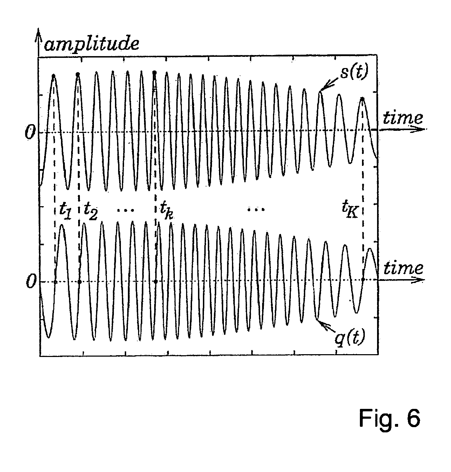

Fig. 6 shows an example of a primary band-pass signal s(t) and a corresponding quadrature signal q(t). For example, a primary signal s(t) may represent a carrier wave $\cos(2\pi f_c t)$ with its amplitude and/or phase modulated by a deterministic or non-deterministic process, including an information-bearing signal. Alternatively, the primary signal s(t) may represent the response of a band-pass filter (having centre frequency $f_c$) when excited by a wideband deterministic or non-deterministic waveform, such as white noise.

There are time instants at which the quadrature signal q(t) crosses the zero level with a positive slope. Those time instants

$$t_1, t_2, \ldots, t_k, \ldots, t_K$$

form a set of *zero upcrossings*; for illustrative purposes, selected zero upcrossings of q(t) and corresponding maxima of s(t) are marked with dots in Fig. 6.

From the basic relationship between a signal and its quadrature version it follows that zero upcrossings of the quadrature signal q(t) will always substantially coincide in time with local maxima of the primary signal s(t). Similarly, zero downcrossings of q(t) and local minima of s(t) will also substantially coincide in time.

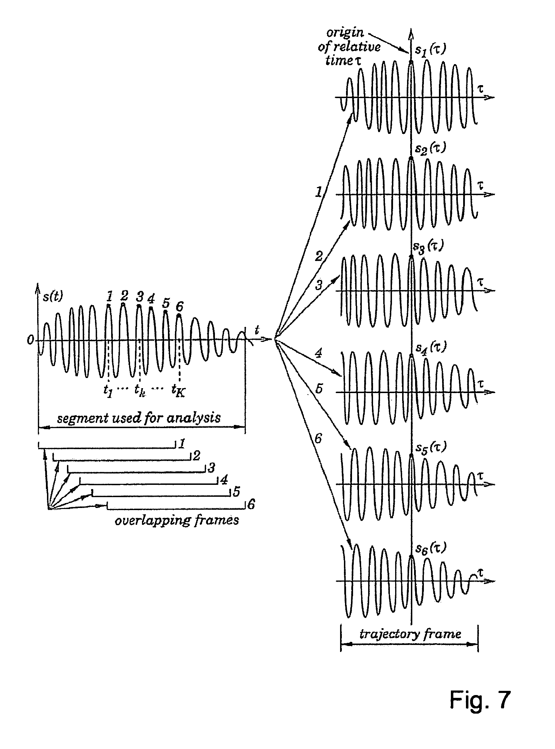

Suppose that any one of zero upcrossings of q(t), say that at $t_k$, has been selected. Consider now the primary signal s(t), depicted for reference in Fig. 7, before and after its local maximum, $s(t_k)$, occurring at this selected time instant $t_k$. For the purpose of this analysis, it is convenient to introduce the notion of signal *trajectory*, associated with a local maximum of the signal. For a maximum occurring at $t_k$, the signal trajectory $s_k(\tau)$ is determined from

$$s_k(\tau) = s(t_k + \tau); \qquad\qquad k = 1, 2, \dots K$$

where $\tau$ is (positive or negative) *relative time.* Accordingly, each trajectory $s_k(\tau)$ is simply a time-shifted copy of the primary signal s(t). The time shift, different for each trajectory, results from the time transformation

$$\tau = t - t_k; \qquad\qquad k = 1, 2, \dots K,$$

used for transporting signal trajectories from the time domain (t) to the tau-domain ($\tau$).

Accordingly, a single primary signal s(t) can generate successively a plurality of trajectories {$s(t_k + \tau)$; k = 1, 2, ... K} that are mapped (by the time shifts) into another set of trajectories {$s_k(\tau)$; k = 1, 2, ... K}, each being a function of relative time $\tau$ in the tau-domain. Such construction makes all local maxima of a primary signal s(t) equivalent in the sense that they, being aligned in time, jointly define the same origin $\tau$ = 0 of the relative time $\tau$.

Fig. 7 illustrates schematically the mechanism of using a segment of a primary signal s(t) to construct a number of trajectories associated with maxima of that signal. The duration of each trajectory used for further processing is determined by a preselected *trajectory frame.* In addition, within this frame, a specific location is selected (e.g., somewhere close to the middle) to become the origin of the relative time $\tau$.

In the example shown in Fig. 7, the signal segment has six maxima, K = 6, which are marked by dots and numbered accordingly. Each signal trajectory, $s_k(\tau)$, corresponding to a respective maximum at t = $t_k$, is constructed in a similar manner. For example, trajectory $s_i(\tau)$ is obtained by applying a two-step procedure:

    1. select maximum 1 and make a copy of the primary signal s(t); in general, the duration of the copy centred around the maximum at t = $t_1$ will not exceed the doubled frame duration;
    2. position the copy obtained in step 1 within the trajectory frame so as to align the timing of maximum 1 with the relative time origin, $\tau$ = 0.

As a result, the origin of the relative time $\tau$ will coincide with the time instant $t_1$ at which maximum 1 occurs in the primary signal s(t).

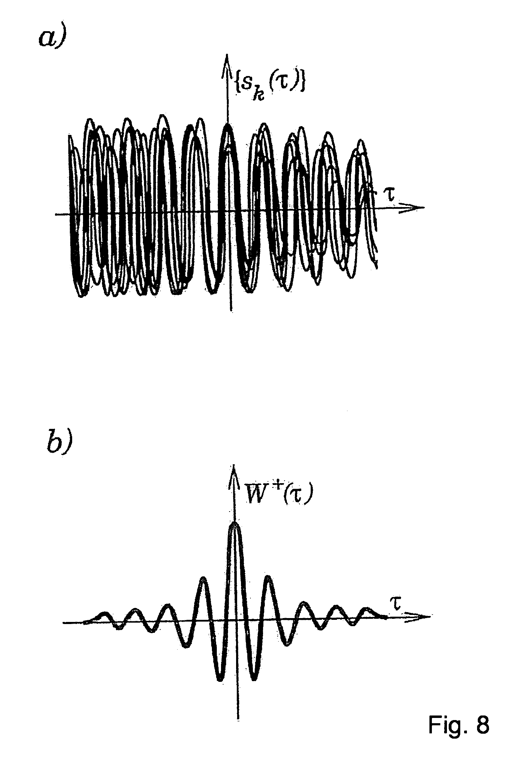

When the above procedure has been replicated for each of the six maxima, the trajectory frame in the tau-domain will have contained all six signal trajectories, and the positions of the corresponding maxima will have coincided with the relative time origin, $\tau$ = 0. For illustrative purposes, Fig. 8a depicts an overlay of time-aligned trajectories in the tau-domain.

K signal trajectories {$s(t_k + \tau)$, k = 1, 2, ... , K}, associated with local maxima {$s(t_k)$} of a primary signal s(t), are used to determine a wavecore function $W^+(\tau)$, defined by

$$W^+(\tau) = \frac{1}{K}\sum_{k=1}^{K} s(t_k + \tau) = \frac{1}{K}\sum_{k=1}^{K} s_k(\tau)$$

The wavecore function $W^+(\tau)$ will always attain its maximum value at $\tau$ = 0; however, for strictly periodic signals, the same maximum value may be observed at other non-zero values of the relative time $\tau$. In general, the shape of the wavecore function will contain information about the coherence of a signal under examination. For example, in the case of a band-pass noise process, the wavecore function will decay more rapidly for a process with a larger bandwidth. Moreover, the peak value will be proportional to the power of the signal being processed.

In many cases, the wavecore function can exhibit a shape quite similar to that of the autocorrelation function. However, in contrast to the autocorrelation function, the wavecore function may assume an asymmetric shape, thus improving signal classification and recognition.

It should be pointed out that in the case of processing signals with stationary (or cyclo-stationary) properties it is not necessary to use all consecutive maxima to determine the wavecore function. For example, when a relatively long record of a stationary random signal is available, it is possible to select maxima separated by at least some predetermined time interval.

Fig. 8b is an example of a wavecore function $W^+(\tau)$ obtained by averaging a number of signal trajectories suitably aligned in the tau-domain.

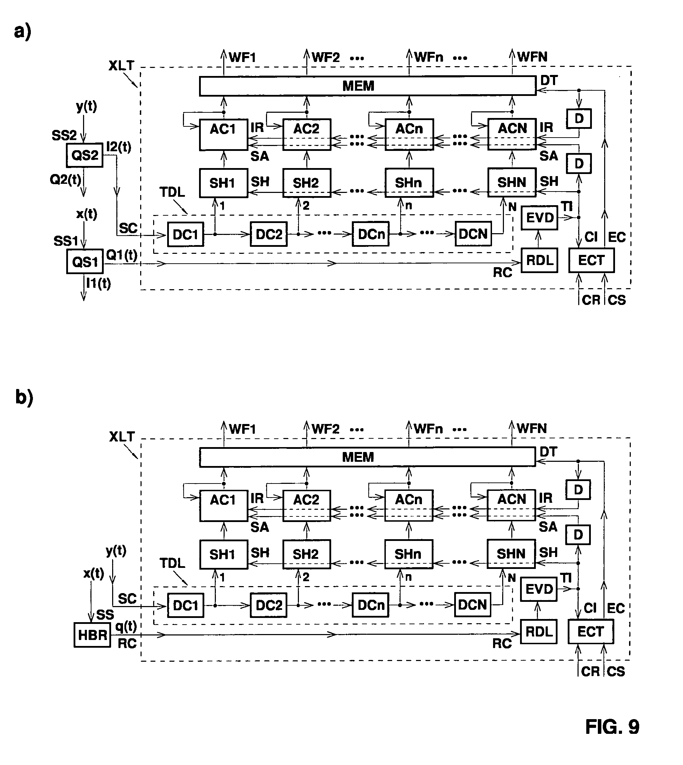

The wavecore function $W^+(\tau)$ can be determined for a band-pass signal of interest with the use of a basic prior-art crosslator system XLT in a system modified to derive a phase-shifted sampling signal as shown in Fig. 9a. A signal x(t) is applied to input SS1 of a quadrature splitter QS1 that produces at an output thereof a quadrature component Q1 (t) of the input signal x(t). The delayed version y(t) of the signal x(t) is applied to input SS2 of a quadrature splitter QS2 that produces at an output thereof a quadrature component 12(t) of the delayed signal y(t). The quadrature components 12(t), Q1(t) are connected, respectively, to the signal input SC and the reference input RC of the crosslator XLT.

The system comprises a cascade of N delay cells, DC1, ..., DCn, ..., DCN, forming a tapped delay line TDL, a plurality of sample-and-hold circuits, SH1, ..., SHn, ..., SHN, a plurality of accumulators AC1, ..., ACn, ..., ACN, a memory MEM, a constant delay line RDL, an event detector EVD, an event counter ECT, and two auxiliary delay units D.

In the configuration shown in Fig. 9a, each of N taps of the delay line TDL provides a time-delayed replica of the delayed signal component I2(t). At any time instant, the values observed at the N taps of the line TDL form jointly a discrete-time representation of a finite segment of the delayed signal component propagating along the delay line TDL. Preferably, the relative delay between consecutive taps of the delay line TDL has a constant value.

The reference signal Q1(t) is delayed in the constant delay line RDL by a time amount equal approximately to the mid-point of the range between the minimum and maximum delays to be detected. The output of the delay line RDL drives the event detector EVD.

When the event detector EVD detects a zero upcrossing in the delayed quadrature signal Q1(t), a short trigger pulse TI is generated to initiate, via the common input SH, a simultaneous operation of all sample-and-hold circuits, SH1, ..., SHn, ..., SHN. Each sample-and-hold circuit SHn captures the instantaneous value of the signal appearing at its input; this value is then acquired by a respective accumulator ACn at the time instant determined by a delayed trigger pulse TI applied to the common input SA. The trigger pulse TI also increments by one via input CI the current state of an event counter ECT.

The capacity of the event counter ECT is equal to a predetermined number of zero upcrossings, being the required number K of signal trajectories to be processed. Accordingly, the time interval needed to detect the predetermined number of zero upcrossings will determine the duration of one complete cycle of operation of the crosslator system.

The capacity of the event counter ECT can be set to a required value by applying a suitable external control signal to input CS. Additionally, the state of the event counter ECT can be reset, via input CR, to an initial 'zero state'; this 'zero state' will also reset to zero all the accumulators. The event counter ECT can be alternatively arranged to operate continually in a 'free-running' fashion.

A trigger pulse TI delayed in the delay unit D initiates, via common input SA, the simultaneous operation of all accumulators driven by respective sample-and-hold circuits. The function of each accumulator ACn is to perform addition of signal values appearing successively at its input during each full operation cycle of the crosslator system. As explained below, all the accumulators are reset to zero, via common input IR, before the start of each new cycle of operation.

When a predetermined number K of zero upcrossings has been detected by the event detector EVD, and registered by the event counter ECT, an end-of-cycle pulse EC is produced at the output of the counter ECT. This pulse initiates, via input DT, the transfer of the accumulators' data to the memory MEM. As a result, a discrete-time version of the determined wavecore function $W^+(\tau)$ will appear at the N outputs, WF1, ..., WFn, ..., WFN of the memory MEM.

An end-of-cycle pulse EC, suitably delayed in the delay unit D, is used to reset to zero, via common input IR, all the accumulators. Also, when operating in a 'free-running' mode, the event counter ECT after reaching its maximum value (capacity) will revert to it initial 'zero state'. At this stage, the crosslator system XLT, having completed its full cycle of operation, is ready to start a new cycle. It should be pointed out that the operation of the crosslator XLT can be terminated and re-started at any time by applying a suitable control signal to input CR of the event counter ECT.

The quadrature splitters QS1 and QS2 may also produce quadrature components I1(t) and Q2(t), respectively, which may be processed in a corresponding manner to components Q1(t) and I2(t) if desired.

Fig. 9b shows a modified version of the arrangement of Fig. 9a. The signal x(t) is applied to input SS of a Hilbert transformer HBR that produces at its output a quadrature version q(t) of the signal x(t). The delayed signal y(t) is connected to the signal input SC of the crosslator XLT and the quadrature version q(t) of the signal x(t) is applied to the reference input RC.

The processors of Figs. 9a and 9b are arranged such that the sampled signal is sampled at its maxima. It is obvious that minima of a sampled signal can also be utilized to construct a complementary wavecore function $W^-(\tau)$, by using zero downcrossings of a sampling signal.

The complement $W^-(\tau)$ of the wavecore function $W^+(\tau)$ can be determined from

$$W^-(\tau) = \frac{1}{M} \sum_{m=1}^{M} s_m^-(\tau)$$

where $s_m^-(\tau)$, m = 1, 2, ... , M, are trajectories associated with minima of the sampled signal s(t) being processed.

From the definition of the complementary wavecore function $W^-(\tau)$ it follows that the function $W^-(\tau)$ can alternatively be determined by utilizing the crosslator XLT of Fig. 9a or 9b when the event detector EVD detects *downcrossings* in the quadrature version, Q1(t) or q(t), respectively, of the input signal x(t).

If desired, the two wavecore functions, $W^+(\tau)$ and $W^-(\tau)$, can be combined as follows

$$W(\tau) = [W^+(\tau) - W^-(\tau)]/2$$

to form an average wavecore function $W(\tau)$.

The average wavecore function $W(\tau)$ can be determined for a band-pass signal of interest with the use of the prior-art crosslator system XLT of Fig. 3, which incorporates the polarity-reversal circuits PI, by applying to the signal input SC and the reference input RC the signals used in the arrangement of Fig. 9a or Fig. 9b.

In accordance with a preferred embodiment of the present invention, a wavecore function such as the average wavecore function $W(\tau)$ is utilized in conjunction with the crosslation function $C(\tau)$.

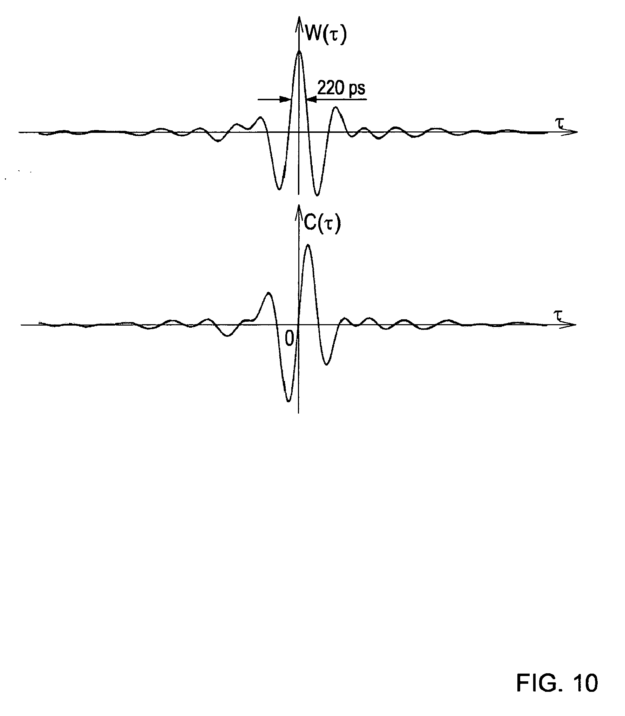

Fig. 10 depicts examples of an average crosslation function $W(\tau)$ and a corresponding crosslation function $C(\tau)$ obtained experimentally for a Gaussian noise having a power spectrum extending from 1 GHz to 2 GHz.

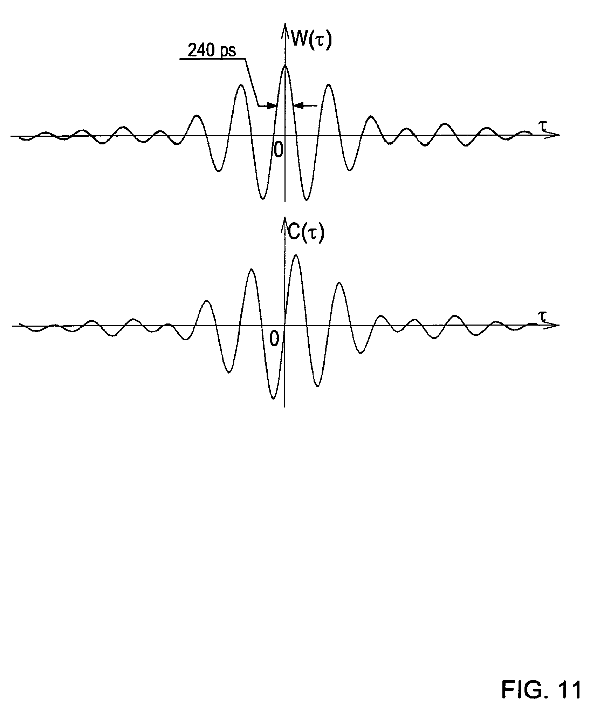

Fig. 11 depicts examples of an average crosslation function $W(\tau)$ and a corresponding crosslation function $C(\tau)$ obtained experimentally for a 1.4 GHz carrier modulated in frequency by an information-bearing signal; in this case, the resulting bandwidth is equal to 450 MHz.

When all four quadrature components of two signals, x(t) and y(t), are available for processing, there are sixteen different sampling arrangements that can be exploited to determine various crosslation and wavecore functions. Some of those arrangements are well suited to the estimation of the time-difference-of arrival (TDOA), whereas the others can be utilized for signal recognition and classification.

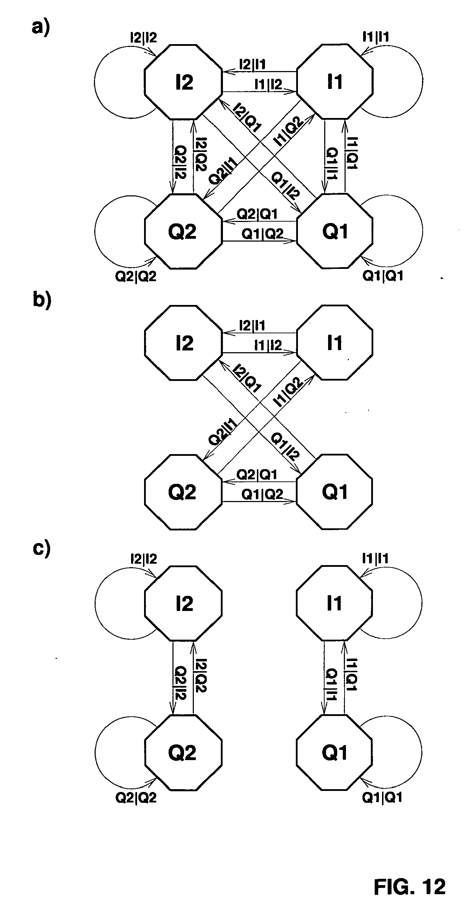

Fig. 12a is a graph showing all possible sampling arrangements. The in-phase and quadrature components of signal x(t) are denoted, respectively, by I1 and Q1; in a similar fashion, I2 and Q2 denote, respectively, the in-phase and quadrature components of signal y(t).

Each sampling/averaging operation (producing either a crosslation or a wavecore function) is denoted symbolically by an arrows and a two-component symbol in which the first component is a signal component being sampled and the second symbol denotes a signal component whose zero-crossing times are used as sampling instants. For example, the symbol I2|Q1 represents sampling and averaging of the in-phase component of signal y(t), while zero crossings of the quadrature component of signal x(t) determine the sampling time instants. In this case, the sampling/averaging operation will produce a wavecore function, shifted in time with respect to the wavecore function of signal x(t) obtained by carrying out the I1|Q1 operation.

Fig. 12b is a graph showing a sub-set of the sampling arrangements represented in the graph shown in Fig. 12a; the sub-set comprises all eight sampling schemes that can be utilized for determining the time-difference-of-arrival (TDUA). Crosslation functions will result from the following operations: I21|I1, I1|I2, Q2|Q1 and Q1|Q2; similarly, the operations, I2|Q1, I1|Q2, Q2|I1 and Q1|I2, will produce respective wavecore functions. It should be noted that the wavecore functions Q2|I1 and Q1|I2 will have reversed polarity.

The above eight crosslation and wavecore functions, either individually or jointly (e.g.,suitably combined), can be used for determining the time-difference-of-arrival (TDOA).

Fig. 12c is another graph showing a sub-set of the sampling arrangements represented in the graph shown in Fig. 12a; the sub-set comprises all eight sampling schemes that can be utilized for signal recognition and classification.

Crosslation functions will result from the following operations: I1|I1, I2|I2, Q1|Q1 and Q2|Q2; similarly, the operations, I1|Q1, I2|Q2, Q1|I1 and Q2|I2, will produce respective wavecore functions. It should be noted that the wavecore functions Q1|I1 and Q2|I2 will have reversed polarity.

The above eight crosslation and wavecore functions, either individually or suitably combined, can be used for signal recognition and classification.

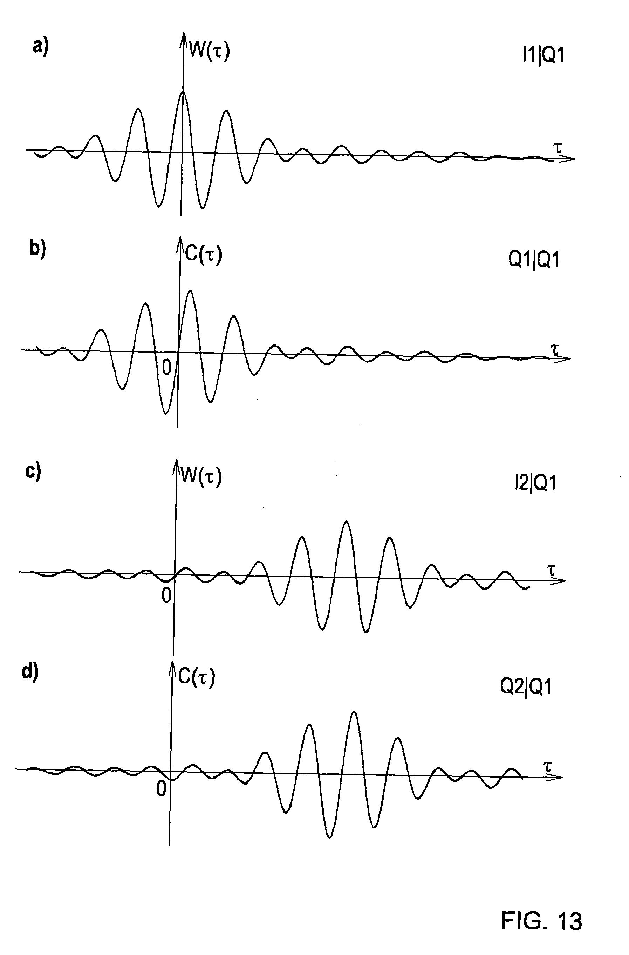

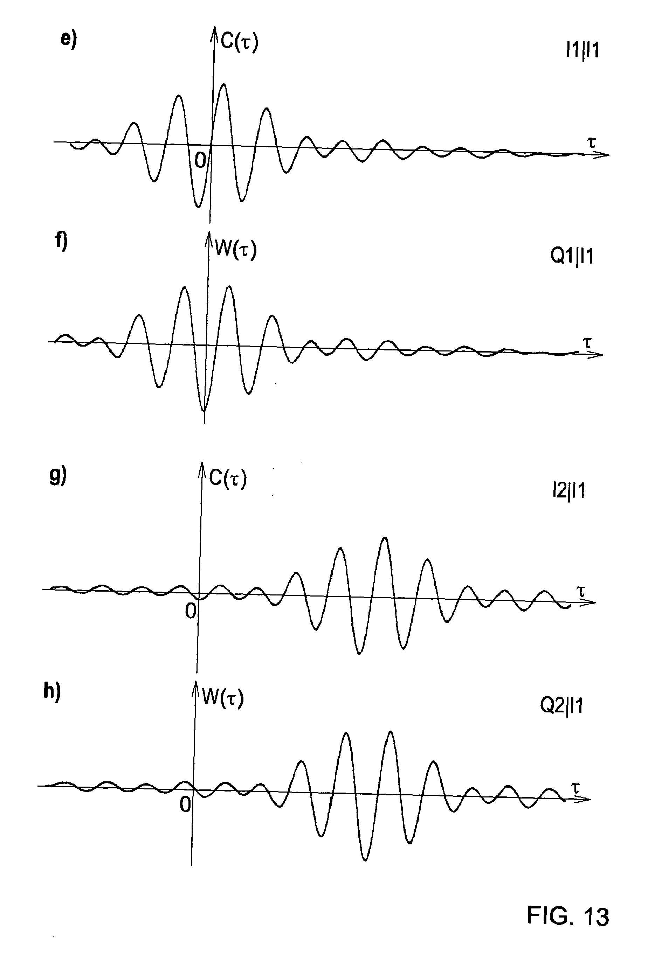

Figs. 13a - 13h depict some selected examples of crosslation and wavecore functions obtained experimentally for a 1.4 GHz carrier modulated in frequency by an information-bearing signal; in this case, the resulting bandwidth is equal to 450 MHz.

For each example, the sampling arrangement is indicated. It will be noted that where a component of one signal version (e.g. I2) is sampled by a component of the other signal version (e.g. Q1), the envelope of the resultant function is shifted along the tau-axis (see, e.g., Fig. 13c), as compared with the situation where a component of one signal version is sampled by another component of the same signal version (see, e.g., Fig. 13a). The amount of the shift represents the time-delay between the signals.

Accordingly it would be possible to determine the time delay by measuring this shift, and, if desired, averaging the measurements of shifts produced by different sampling arrangements. However, in the preferred embodiments of the invention described below, a more accurate determination is obtained by measuring the shifts of individual features of the functions, rather than merely their envelopes.

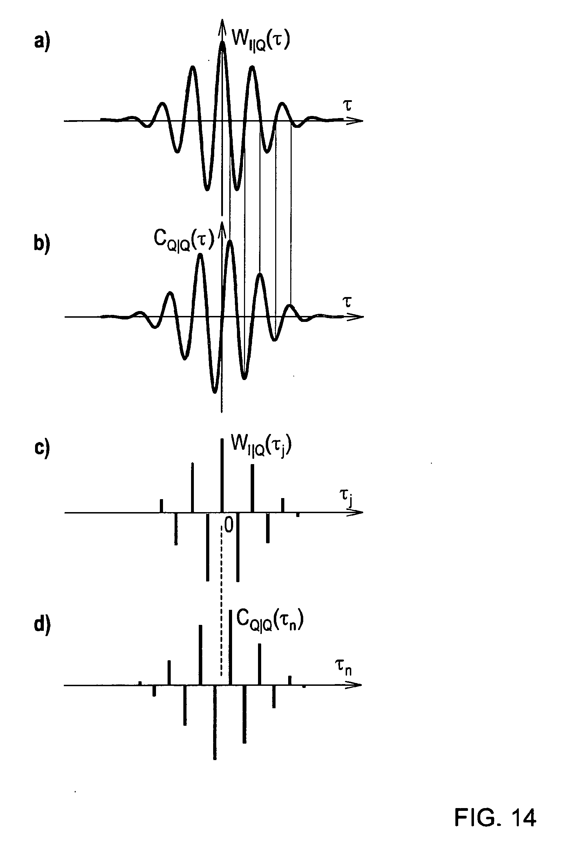

With reference to Fig. 14, in one embodiment, it is assumed that a wideband band-pass signal of interest, $x(t)$, is represented by its two quadrature components, $I1(t)$ and $Q1(t)$. A delayed version $y(t)$ of the signal $x(t)$ also has two quadrature components, $I2(t)$ and $Q2(t)$. In accordance with the invention, zero crossings of the component $Q2(t)$ are used to sample simultaneously both the quadrature components, $I1(t)$ and $Q1(t)$. As a result, a wavecore function, $W_{I|Q}(\tau)$ (Fig. 14a, using sampling arrangement I1|IQ2) and a crosslation function $C_{Q|Q}(\tau)$ (Fig. 14b, using sampling arrangement Q1|Q2), are obtained. Next, zero crossings of the crosslation function $C_{Q|Q}(\tau)$ are used to determine the relative time instants $\{\tau_j\}$ at which the wavecore function $W_{I|Q}(\tau)$ is sampled to construct the time series $W_{I|Q}(\tau_j)$ of samples shown in Fig. 14c.

The above sample pattern, referred to herein as a fringe pattern, can be regarded as a discrete-time representation of the underlying band-pass signal; the fringe pattern also contains information about the delay between the signals $x(t)$ and $y(t)$.

In a similar manner, zero crossings of the wavecore function $W_{I|Q}(\tau)$ are used to determine the relative time instants $\{\tau_n\}$ at which the crosslation function $C_{Q|Q}(\tau)$ is sampled to construct the time series $C_{I|Q}(\tau_n)$ shown in Fig. 14d.

The above time series can be regarded as yet another discrete-time fringe representation of the underlying band-pass signal.

It is obvious that other sampling arrangements discussed above and depicted symbolically in Fig. 12 can be exploited to construct a number of useful fringe representations suitable for determining the time-difference-of-arrival (TDOA) as well as for signal recognition and classification.

The fringe patterns of intercepted wideband band-pass signals provide:

- very precise timing information;
- unique signal characterization in terms of the loss of coherency as a function of the relative time.

The location of the fringe patterns (relative to the delay introduced by a respective delay line TDL) is indicative of the delay between the sampling signal and the signal being sampled.

An arrangement which derives two functions by using zero-crossings of one signal to sample two phase-shifted versions of another signal is referred to herein as an analytic crosslator. The two functions may be a crosslation function and a wavecore function (if the sampling signal is in phase with one of the sampled signals), or may be two wavecore functions.

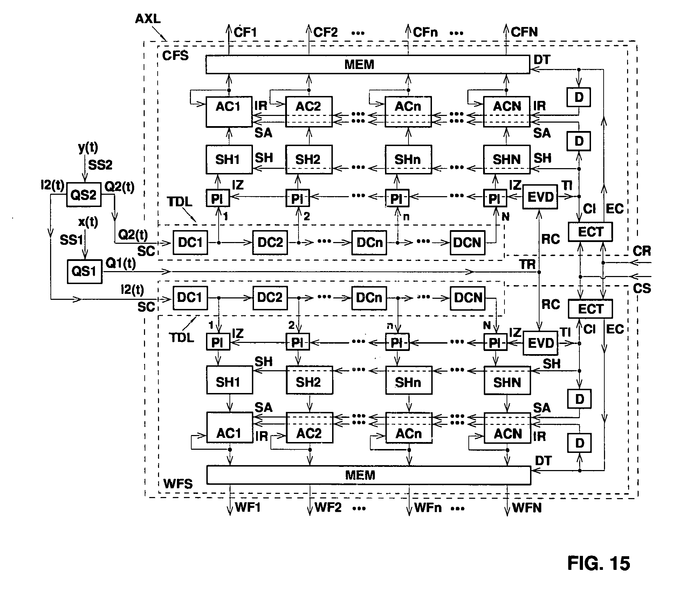

An analytic crosslator may be embodied as shown in the block diagram of Fig. 15.

This uses two versions of the crosslator of Fig 3, modified to receive appropriate quadrature components of the signals $x(t)$ and $y(t)$. The analytic crosslator AXL has a crosslation function subsystem CFS which samples a first quadrature component $Q2(t)$ of a delayed signal $y(t)$, and a wavecore function subsystem WFS which samples a second quadrature component $I2(t)$ of the delayed signal $y(t)$. In both subsystems, sampling is performed in response to zero crossings in a first quadrature component $Q1(t)$ of a reference signal $x(t)$, which forms a reference 'trigger' signal TR which is applied to respective event detectors EVD in both the subsystems, CFS and WFS. The obtained wavecore and crosslation functions can then be used as described with reference to Fig. 14. In particular, events such as zero-crossings in one (or both) of these functions can be used to sample the other function.

In practice, zero crossings of crosslation and wavecore functions occur in the relative-time domain $\tau$; hence, they are not observable due to the discrete nature of a tapped delay line used in the signal processing. Since for practical reasons the relative-time quantization is usually rather coarse, the timing of each such zero crossing is preferably determined by suitable interpolation. It should be noted that in the relative-time domain $\tau$, the discrete timing steps are defined by the respective taps of a tapped delay line.

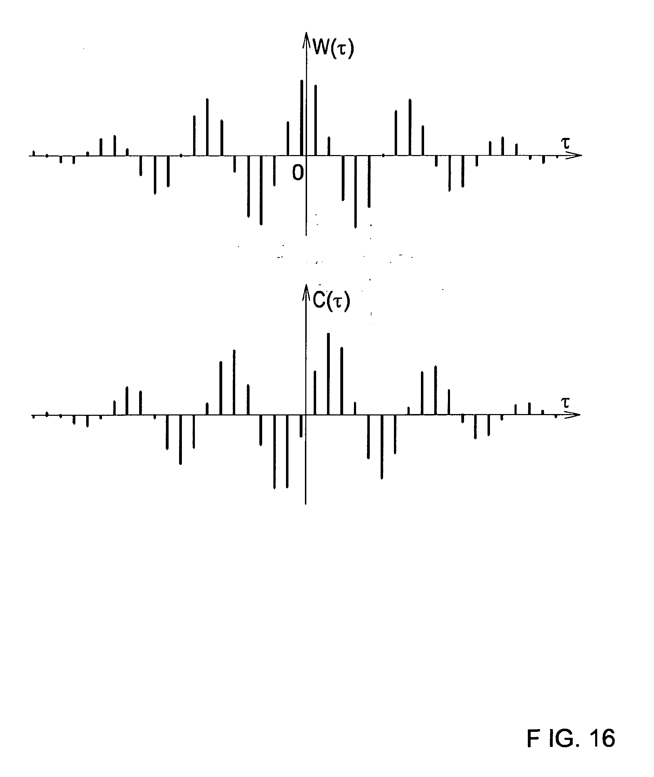

For illustrative purposes, Fig. 16 depicts both the wavecore function $W(\tau)$ and the crosslation function $C(\tau)$ obtained experimentally for a 1.4 GHz carrier modulated in frequency by an information-bearing signal. In this case, the resulting signal bandwidth is equal to 450 MHz and the delay between consecutive taps of the tapped delay line is equal to 100 ps .

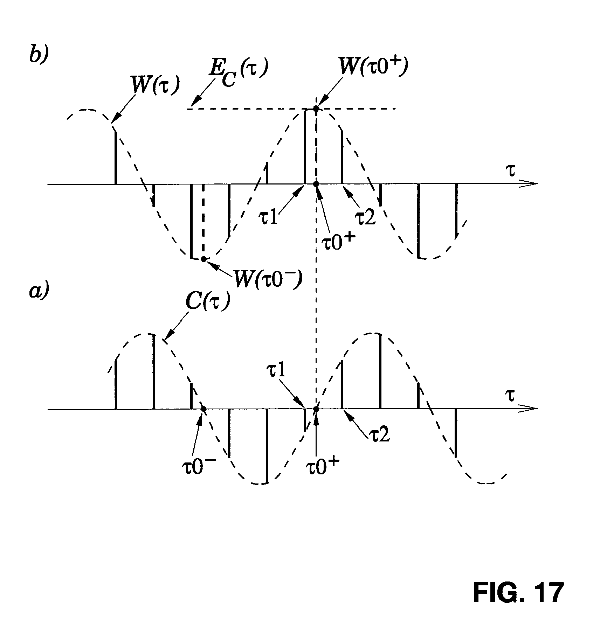

Fig. 17 depicts one example of a suitable interpolation procedure. In Fig. 17a, the timing $\tau0^+$ of an 'implicit' zero upcrossing of the discrete-time crosslation function $C(\tau)$ is determined by utilizing the two consecutive time instants, $\tau1$

and τ2, at which the crosslation function C(τ) assumes, respectively, a negative and a positive value; i.e. C(τ1) < 0 and C(τ2) > 0.

The value of the corresponding wavecore function W(τ) at the time instant τ0⁺ could be determined from the values of W(τ) at times τ1 and τ2 using a linear-interpolation procedure. However, because the values of W(τ1) and W(τ2) are on opposite sides of a peak value, a significant error will arise unless compensating measures are taken.

Accordingly, in the preferred embodiment, the linear-interpolation procedure is instead applied to the crosslation envelope $E_C(\tau)$ defined by

$$E_C(\tau) = \sqrt{W^2(\tau) + C^2(\tau)}$$

Consequently, W(τ0⁺) = $E_C$(τ0⁺), where the value $E_C$(τ0⁺) results from linear interpolation utilizing the values $E_C$(τ1) and $E_C$(τ2). In the case of a crosslation zero-downcrossing, determined in a similar manner at some τ0⁻, the corresponding value of the wavecore function will be determined as W(τ0⁻) = -$E_C$(τ0⁻).

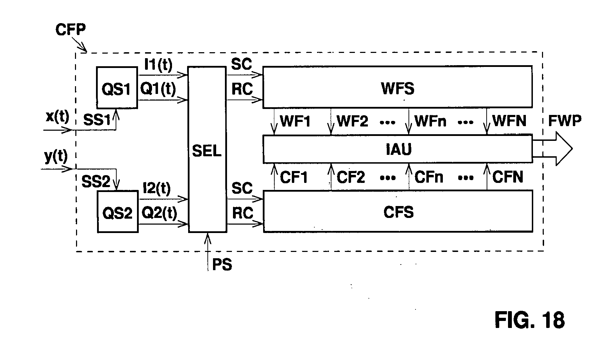

The above interpolation procedures and the construction of the respective fringe patterns can be carried out with the use of a crosslation fringe processor CFP shown in block form in Fig. 18. The fringe processor CFP comprises two quadrature splitters, QS1 and QS2, a signal selector SEL, a wavecore function subsystem WFS, a crosslation function subsystem CFS, and an interpolating arithmetic unit IAU.

A control signal applied to the pattern-select input PS of the signal selector SEL determines the type of a fringe pattern to be produced by the crosslation fringe processor CFP. (All possible fringe patterns can be defined by analyzing the graph depicted in Fig. 12.) The interpolating arithmetic unit IAU receives at its inputs, WF1, ... , WFn, ... , WFN and CF1, ... , CFn, ... , CFN, respectively, representations of wavecore and crosslation functions to convert them into a selected fringe pattern; this pattern will appear at the output FWP of unit AIU.

Referring again to Fig. 14, this shows the wavecore function $W_{I|Q}(\tau)$ at (a) and the crosslation function $C_{Q|Q}(\tau)$ at (b). The samples of the wavecore function corresponding to the zero-crossings in the crosslation function are shown at (c).

The samples of the crosslation function corresponding to the zero-crossings in the wavecore function are shown at (d). It is noted that the sample timings and amplitudes correspond to the positive and negative peaks of the respective functions.

The positions and magnitudes of these samples form fringe patterns used for time delay determination. The specific high-accuracy timing structure of the patterns can be exploited for precise localization of a wideband band-pass signal in time, which is especially useful in determining the time-difference-of-arrival (TDOA) or angle-of-arrival (AOA). For such applications, a single amplitude-time fringe pattern, a pair of such patterns, or a suitable combination of fringe patterns, can be used.

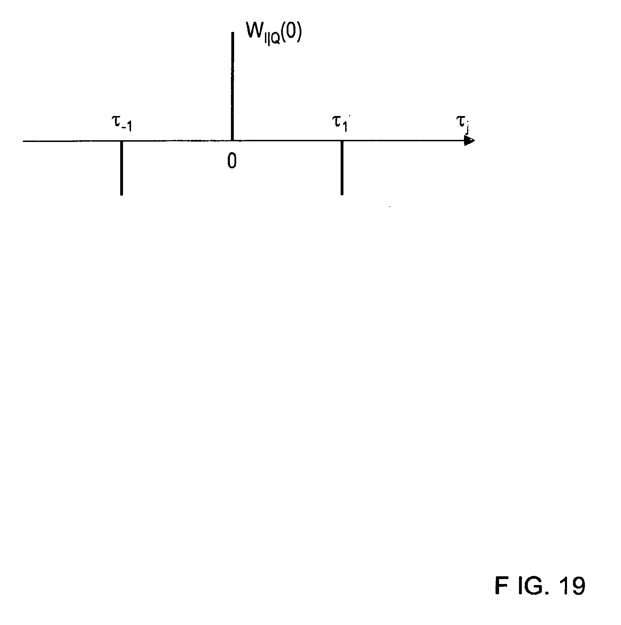

A basic fringe pattern may be obtained by simply using three central samples of the wavecore function obtained as described above. The central sample $W_{I|Q}(0)$ is referred to as a zero-order fringe, whereas the other two samples, occurring at opposite sides of the central sample, are referred to as first-order fringes. A basic fringe pattern based on the samples obtained from the pattern $W_{I|Q}(\tau_j)$ is shown in Fig. 19.

In order to avoid time ambiguity, the magnitudes of higher-order fringes should be substantially less than those of the other fringes used in the fringe pattern. This property can be attained by suitably designing the signal transmitted by a cooperative signal source, such as a deployed radio tag. However, in the case of a non-cooperative signal source, this condition can be met by shifting the signal spectrum in the receiver to such a frequency region in which the resulting signal will have a wider fractional bandwidth.

More precise fringe patterns can be obtained by suitably combining samples from one pattern (e.g. $W_{I|Q}(\tau)$) with samples of a complementary pattern (e.g. $C_{Q|Q}(\tau)$).

In a preferred embodiment, to obtain a precise fringe pattern, three central samples of the wavecore-based pattern and two central samples of the crosslation-based pattern are interleaved with preserved timings, but reversed-polarity amplitudes, if the respective samples are determined at corresponding zero downcrossings.

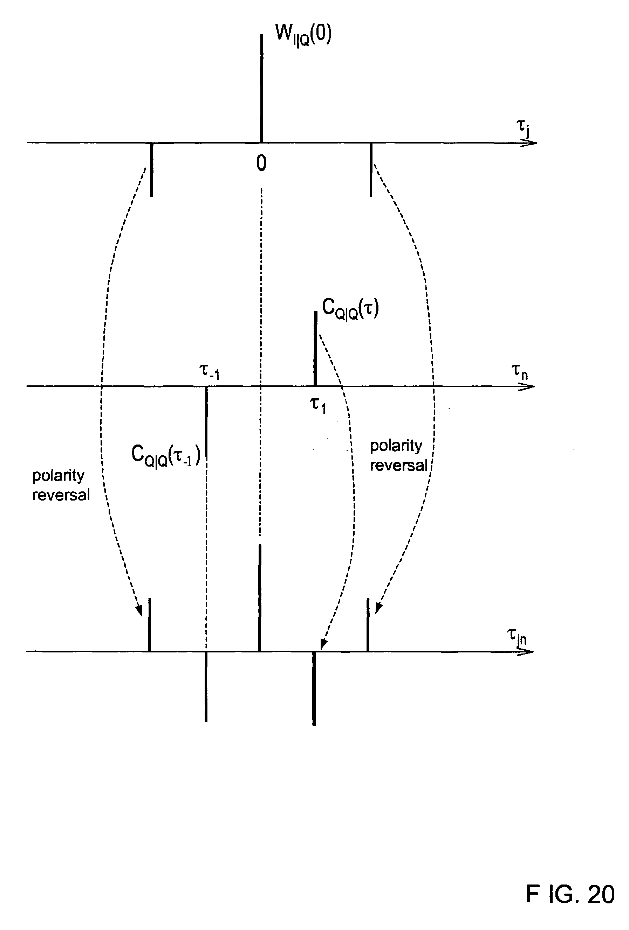

Fig. 20 depicts schematically the method of combining samples of a pair of sample patterns to construct a precise five-fringe pattern. As seen, in the resulting fringe pattern, the distance between adjacent fringes is one half of that observed in a basic three-fringe pattern; therefore, the potential accuracy of determining a relative time delay will increase accordingly.

For example, in a five-fringe pattern obtained from the wavecore and crosslation functions shown in Fig. 10, the 'distance' between consecutive fringes is equal to 166 ps. Such a time interval corresponds to a 5-cm path of a propagating electromagnetic wave.

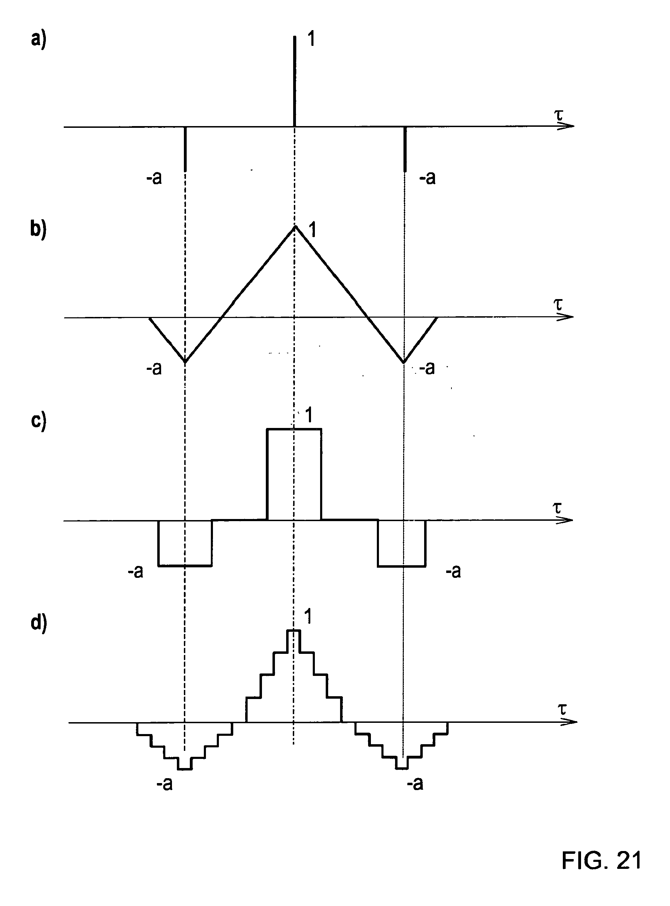

Fig. 21a depicts the simple fringe pattern of Fig. 19, normalised such that the central peak has a unit magnitude. The other diagrams shown in Figs. 21b, 21c and 21 d are some examples of the impulse responses of various practical approximations to a filter matched to a reference fringe pattern. In a preferred embodiment of the invention, a reference fringe pattern is used to construct a filter matched to that pattern in order to detect the presence of the pattern, and then to 'localize' the pattern in the relative time. Such a filter is preferred in practice because the time positions of observed fringes will always be somewhat perturbed due to noise and other factors. Obviously, matched filters can also be used for detection of more precise fringe patterns, such as that of Fig. 20.

In time delay determination in a preferred embodiment, zero crossings of a quadrature component $Q1(t)$ of a first signal $x(t)$ are used to perform sampling of both the quadrature components, $12(t)$ and $Q2(t)$, of a second signal $y(t)$, where there is a delay between signals $x(t)$ and $y(t)$. Further processing will result in a fringe pattern, either advanced or retarded in the relative time, with respect to the time position of a reference fringe pattern corresponding to an average mutual delay equal nominally to zero.

Similarly, zero crossings of a quadrature component $Q2(t)$ of a delayed signal $y(t)$ are used to perform sampling of both the quadrature components, $I1(t)$ and $Q1(t)$, of the first signal $x(t)$. Further processing will lead to a fringe pattern, either retarded or advanced in time, with respect to the time position of a reference fringe pattern corresponding to an average mutual delay equal nominally to zero.

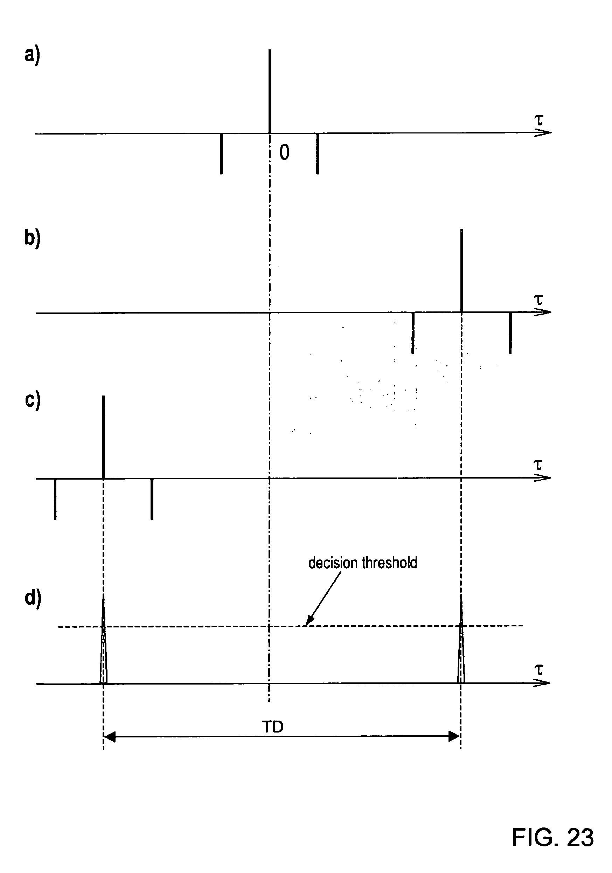

As described below with reference to Fig. 23, the separation between the two fringe patterns, one advanced and the other retarded with respect to a fringe pattern corresponding to a zero mutual-delay, represents twice the delay between the signals $x(t)$ and $y(t)$.

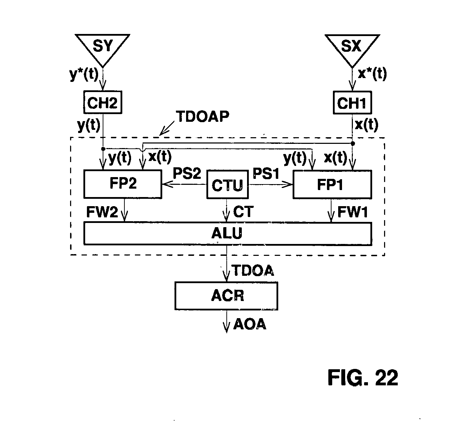

Fig. 22 is a block diagram of a preferred embodiment of an angle-of-arrival detector in accordance with the invention. SX and SY represent sensors of an incoming signal received at different times, producing band-pass signals $x^*(t)$ and $y^*(t)$ respectively. CH1 and CH2 are signal conditioning units receiving signals $x^*(t)$ and $y^*(t)$ and outputting, respectively, conditioned band-pass signals $x(t)$, $y(t)$ to a time-difference-of-arrival processor TDOAP. The conditioned signals are delivered in a parallel fashion to two crosslation fringe processors FP1 and FP2, each having the structure of the crosslation fringe processor CFP depicted in Fig. 18.

Fringe patterns produced by each of the two crosslation fringe processors, FP1 and FP2, are determined by suitable control signals, PS1 and PS2, supplied by a control unit CTU. The selected fringe patterns, FW1 and FW2, are applied to two inputs of an arithmetic logic unit ALU; the unit also receives a signal CT from the control unit CTU indicative of the type of the supplied fringe patterns.

The arithmetic logic unit ALU processes the two fringe patterns, FW1 and FW2, to determine the delay between the intercepted signals $x(t)$ and $y(t)$. Assuming there is no delay between the signals $x(t)$ and $y(t)$, the fringe patterns will coincide as shown in Fig. 23a. However, if there is a delay, one of the fringe patterns will appear retarded with respect to the zero-delay position, as shown in Fig, 23b, whereas the other fringe pattern will appear advanced, as shown in Fig. 23c. The unit ALU is arranged to apply matched filtering to the fringe patterns being processed.

The outputs of the matched filters is shown in Fig. 23d. The unit ALU measures the separation TD (see Fig. 23d) between the fringe patterns (e.g., by locating the centre of gravity or the median position of each pattern). The delay between the signals $x(t)$ and $y(t)$ is calculated to be TD/2, and is output by the time difference of arrival processor TDOAP as signal TDOA. An angle calculator ACR calculates the bearing of the signal source using the techniques of Fig. 1.

It is alternatively possible, especially in a high signal-to-noise case, to sample only one (e.g., the stronger) of the two received signal replicas in order to obtain a reference fringe pattern.

The foregoing description of preferred embodiments of the invention has been presented for the purpose of illustration and description. It is not intended to be exhaustive or to limit the invention to the precise form disclosed. In light of the foregoing description, it is evident that many alterations, modifications, and variations will enable those skilled in the art to utilize the invention in various embodiments suited to the particular use contemplated.

In the preferred embodiments of the present invention, the phase shift between the frequency components of the sampled signals is 90°, i.e. the signals have a quadrature relationship. This has been found to give especially improved results as compared with simple crosslation, where the result may be influenced by the particular phase relationship between the sampled and sampling signals. However it would be possible to use any other non-zero phase shift to obtain improved results. (The phase-shifted signal should not be simply an inverted version of the sampled signal, and accordingly references to a non-zero phase amount are intended herein to mean a phase amount $\theta$, where $\theta$ MOD 180° $\diamond$ 0. This assumes a zero group-delay between the signals.)

In various embodiments described above, it is possible to sample in response only to upcrossings or only in response to downcrossings, instead of both.

In order to perform wavecore processing, two versions of a signal are required, one being phase-shifted relative to the other; as discussed above, one version can be derived from the other version (e.g., by a Hilbert Transform), or both can be derived from a primary signal. If one version is derived from the other version, the derived version can be used as the sampling signal or as the sampled signal. Furthermore, where crosslation processing is also performed, either version can be sampled to obtain the crosslation function. Generally, in wavecore and/or crosslation processing, it is possible to repeat the processing operation with the sampling and sampled signal versions interchanged.

Although most of the above-described wavecore processors use signal versions which are simply phase-shifted copies of each other, this is not essential. For example, the Hilbert transformer of Fig. 9b may be constituted by a tapped delay line with the tapped outputs being weighted and combined; the output may not necessarily have the same amplitude profile as the source version of the signal.

However, this is unimportant if the zero-crossings occur at the same times as a correspondingly phase-shifted true copy of the source signal.

The sequence in which various steps are performed may be varied considerably. For example, the above embodiments have a 'parallel' configuration in which samples relating to different time shifts are taken simultaneously; it would be possible instead to have a 'serial' configuration whereby the chains of delay units are replaced by a single variable delay, the samples corresponding to different delays being obtained in a sequential manner by varying the delay.

The invention can be used with many different kinds of signals, including electromagnetic and acoustic. The signal may be a sinusoidal band-pass signal having a bandwidth resulting from, for example, frequency modulation (linear, nonlinear or random), or the use of pulsed sine waves (possibly modulated) of finite duration. The zero crossings used for sampling may be spaced at irregular or regular intervals. The invention is applicable generally to measuring time delay between signals, as well as to object location using passive or active cooperating or non-cooperative systems.

## Claims

1. A method of measuring the amount by which first and second signals are delayed with respect to each other, the method comprising:

   (a) deriving first and second versions of the first signal, the first version having one or more frequency components each being shifted in phase with respect to a corresponding component of the second version by the same predetermined, non-zero phase amount;
   (b) sampling the first and second versions of the first signal at sampling instants determined by zero-crossings of the second signal;
   (c) combining the samples from the first version of the first signal to derive a first value and combining the samples from the second version of the first signal to derive a second value;
   (d) shifting the first and second signals with respect to each other by different time values, and, for each time value, repeating the sampling and combining steps, the first values forming a first representation of the first signal and the second values forming a second representation of the first signal, each representation having an amplitude which varies with respect to the time value shift and a position relative to the time value shift which is dependent on the delay between the signals; and
   (e) determining the delay between the signals from the positions of the representations.

2. A method as claimed in claim 1, including the step of using zero-crossings of one of the representations to sample the other representation, to derive a sample pattern the position of which, with respect to the time value shift, is determined by the amount by which the first and second signals are delayed with respect to each other.

3. A method as claimed in claim 2, wherein the sample of the other representation is determined by interpolation using values of the function $\sqrt{[A^2(\tau) + B^2(\tau)]}$ (where $\tau$ represents time shift, $A(\tau)$ is one of the representations, $B(\tau)$ is the other of the representations) at the times of the zero-crossings of said one of the representations.

4. A method as claimed in claim 2 or claim 3, further including the step of detecting the sample pattern using a pattern template such as a matched filter.

5. A method as claimed in claim 1, including the step of calculating the delay by measuring the positions of the envelopes of the representations.

6. A method as claimed in any preceding claim, wherein the predetermined, non-zero phase amount is 90 degrees.

7. A method as claimed in any preceding claim, wherein the second version is derived from the first version.

8. A method as claimed in any preceding claim, wherein both positive-slope and negative-slope zero-crossings of the second signal are used to determine sampling instants at which the versions of the first signal are sampled.

9. A method as claimed in any preceding claim, further including the steps of:

(f) deriving first and second versions of the second signal, the first version of the second signal having one or more frequency components each being shifted in phase with respect to a corresponding component of the second version of the second signal by the same predetermined, non-zero phase amount;

(g) sampling the first and second versions of the second signal at sampling instants determined by zero-crossings of the first signal;

(h) combining the samples from the first version of the second signal to derive a third value and combining the samples from the second version of the second signal to derive a fourth value; and

(i) shifting the first and second signals with respect to each other by different time values, and, for each time value, repeating the sampling step (g) and the combining step (h);

the third and fourth values forming respective first and second representations of the second signal, each representation having an amplitude which varies with respect to the time value shift and a position relative to the time value shift which is dependent on the delay between the signals, whereby the delay between the signals can be calculated from the positions of the representations of the second signal.

10. A method as claimed in any preceding claim, wherein each of the first and second signals is derived from a respective sensor.

11. A method as claimed in claim 10, the method further including the step of calculating, from said delay, a bearing of an object generating or influencing the signals sensed by the sensors.

12. Apparatus for determining the delay between two signals, the apparatus being arranged to operate according to a method as claimed in any preceding claim.

13. Object bearing detection apparatus comprising two sensors each arranged to detect signals from an object, apparatus as claimed in claim 12 for determining the delay between these signals, and means for calculating, from said delay, the bearing of said object.

14. Object locating apparatus comprising at least two object bearing detection apparatuses as claimed in claim 13.

PRIOR ART    Fig. 1

PRIOR ART                                    Fig. 2

EP 2 221 629 A1

Fig. 3

PRIOR ART

17

*a)*

*b)*

PRIOR ART     Fig. 4

Fig. 5

Fig. 6

Fig. 7

*a)*

$\{s_k(\tau)\}$

$\tau$

*b)*

$W^+(\tau)$

$\tau$

Fig. 8

**a)**

**b)**

**FIG. 9**

FIG. 10

FIG. 11

FIG. 12

a)

$W(\tau)$

I1|Q1

$\tau$

b)

$C(\tau)$

Q1|Q1

0

$\tau$

c)

$W(\tau)$

I2|Q1

0

$\tau$

d)

$C(\tau)$

Q2|Q1

0

$\tau$

FIG. 13

**e)**
$C(\tau)$
I1|I1

**f)**
$W(\tau)$
Q1|I1

**g)**
$C(\tau)$
I2|I1

**h)**
$W(\tau)$
Q2|I1

FIG. 13

a) $W_{I|Q}(\tau)$

$\tau$

b) $C_{Q|Q}(\tau)$

$\tau$

c) $W_{I|Q}(\tau_j)$

0

$\tau_j$

d) $C_{Q|Q}(\tau_n)$

$\tau_n$

FIG. 14

FIG. 15

F IG. 16

**FIG. 17**

FIG. 18

$$W_{IIQ}(0)$$

$$\tau_{-1} \qquad \tau_1 \qquad \tau_j$$

$$0$$

F IG. 19

FIG. 20

FIG. 21

FIG. 22

a)

$\tau$

0

b)

$\tau$

c)

$\tau$

decision threshold

d)

$\tau$

TD

FIG. 23

Europäisches
Patentamt

European
Patent Office

Office européen
des brevets

## EUROPEAN SEARCH REPORT

**Application Number**

EP 09 25 0474

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 6 161 062 A (SICRE JEAN-LUC [FR] ET AL) 12 December 2000 (2000-12-12) * figure 5 * ----- | 1-8 | INV. G01S3/04 G01S3/48 |
| Y | SZAJNOWSKI W J ET AL: "Implicit averaging and delay determination of random binary waveforms" IEEE SIGNAL PROCESSING LETTERS, IEEE SERVICE CENTER, PISCATAWAY, NJ, US, vol. 9, no. 7, 1 July 2002 (2002-07-01), pages 193-195, XP002377189 ISSN: 1070-9908 * the whole document * * page 195, left-hand column, line 23 - line 27 * ----- | 1-8 | ADD. G01S5/02 |
| D,Y | US 6 539 320 B1 (SZAJNOWSKI WIESLAW JERZY [GB] ET AL) 25 March 2003 (2003-03-25) | 1-8 | |
| A | * the whole document * ----- | 9-14 | |
| D,Y | EP 1 596 220 A (MITSUBISHI ELECTRIC INF TECH [GB]; MITSUBISHI ELECTRIC CORP [JP]) 16 November 2005 (2005-11-16) | 1-8 | **TECHNICAL FIELDS SEARCHED (IPC)** |
| A | * the whole document * ----- | 9-14 | G01S |

The present search report has been drawn up for all claims

| Place of search | Date of completion of the search | Examiner |
|---|---|---|
| Munich | 6 July 2009 | Ó Donnabháin, C |

EPO FORM 1503 03.82 (P04C01)

## ANNEX TO THE EUROPEAN SEARCH REPORT
## ON EUROPEAN PATENT APPLICATION NO.

EP 09 25 0474

This annex lists the patent family members relating to the patent documents cited in the above-mentioned European search report.
The members are as contained in the European Patent Office EDP file on
The European Patent Office is in no way liable for these particulars which are merely given for the purpose of information.

06-07-2009

| Patent document cited in search report | | Publication date | Patent family member(s) | | Publication date |
|---|---|---|---|---|---|
| US 6161062 | A | 12-12-2000 | DE | 69701031 D1 | 03-02-2000 |
| | | | DE | 69701031 T2 | 03-08-2000 |
| | | | EP | 0875002 A1 | 04-11-1998 |
| | | | FR | 2743892 A1 | 25-07-1997 |
| | | | WO | 9726553 A1 | 24-07-1997 |
| | | | JP | 2000504284 T | 11-04-2000 |
| US 6539320 | B1 | 25-03-2003 | AT | 346328 T | 15-12-2006 |
| | | | AU | 1882400 A | 31-07-2000 |
| | | | DE | 69934142 T2 | 20-09-2007 |
| | | | EP | 1145084 A1 | 17-10-2001 |
| | | | ES | 2277457 T3 | 01-07-2007 |
| | | | WO | 0039643 A1 | 06-07-2000 |
| | | | GB | 2345149 A | 28-06-2000 |
| | | | JP | 3706305 B2 | 12-10-2005 |
| | | | JP | 2002533732 T | 08-10-2002 |
| | | | JP | 2005249800 A | 15-09-2005 |
| EP 1596220 | A | 16-11-2005 | CN | 1696734 A | 16-11-2005 |
| | | | JP | 2005326419 A | 24-11-2005 |
| | | | US | 2006280032 A1 | 14-12-2006 |

EPO FORM P0459

For more details about this annex : see Official Journal of the European Patent Office, No. 12/82

**REFERENCES CITED IN THE DESCRIPTION**

**Patent documents cited in the description**

- US 6539320 B

- EP 1596220 A